# Europäisches Patentamt

# European Patent Office

# Office européen des brevets

(19)

(11) Veröffentlichungsnummer: **0 071 651**
**B1**

(12) **EUROPÄISCHE PATENTSCHRIFT**

(45) Veröffentlichungstag der Patentschrift:
03.06.87

(51) Int. Cl.⁴: **G 11 B 5/82**

(21) Anmeldenummer: **81105823.9**

(22) Anmeldetag: **23.07.81**

(54) **Magnetplattensubstrat mit aus Kunststoff bestehendem Kern.**

(43) Veröffentlichungstag der Anmeldung:
**16.02.83 Patentblatt 83/7**

(45) Bekanntmachung des Hinweises auf die Patenterteilung:
**03.06.87 Patentblatt 87/23**

(84) Benannte Vertragsstaaten:
**AT BE CH DE FR GB IT LI NL SE**

(56) Entgegenhaltungen:
**DE - A - 2 016 178**
**DE - B - 1 299 029**

(73) Patentinhaber: **IBM DEUTSCHLAND GMBH,**
**Pascalstrasse 100, D-7000 Stuttgart 80 (DE)**

(84) Benannte Vertragsstaaten: **DE**

(73) Patentinhaber: **International Business Machines**
**Corporation, Old Orchard Road, Armonk,**
**N.Y. 10504 (US)**

(84) Benannte Vertragsstaaten: **BE CH FR GB IT LI NL SE AT**

(72) Erfinder: **Hinkel, Holger, Dr., Zeisigweg 13,**
**D-7030 Böblingen (DE)**
Erfinder: **Künzel, Ulrich, Dr., Wennfeldergarten 30,**
**D-7400 Tübingen (DE)**
Erfinder: **Max, Erhard, Dr., Eichendorffstrasse 11,**
**D-7263 Bad Liebenzell (DE)**
Erfinder: **Schneider, Jochen, Burgenstrasse 39,**
**D-7031 Gärtringen 2 (DE)**

(74) Vertreter: **Herzog, F. Joachim, Dipl.-Ing, Schönaicher**
**Strasse 220, D-7030 Böblingen (DE)**

## Beschreibung

Die Erfindung betrifft ein Magnetplattensubstrat mit aus Kunststoff bestehendem Kern und beidseitig darauf angebrachten Metallbelegungen.

Ein derartiges Magnetplattensubstrat ist aus der deutschen Offenlegungsschrift DE-A-2 016 178 bekannt. Der dort beschriebene Magnetplattenspeicher besteht aus einer einzelnen Platte mit einem Kunststoffkern und beidseitig angebrachten Messinglamellen. Diese Lamellen bilden zusammen mit einem Ring eine äussere Haut um den Kunststoffkern herum. Die Lamellen haben eine Dicke von einem Millimeter und der Kern von etwa 10 Millimeter, so dass eine Gesamtdicke von etwa 12 Millimeter für die Magnetplatte, jedoch noch ohne die Magnetbeschichtung, welche erst später aufgebracht wird, erreicht wird. Nachteilig bei einer solchen Anordnung ist die enorme Plattendicke, die nach dem derzeitigen Stand der Technik von Platz und Grösse her nicht vertretbar erscheint, sowie das erhebliche Gewicht.

Aus der deutschen Auslegeschrift 1 299 029 ist eine Magnetplatte bekannt, deren Kern aus Kunststoff besteht. Gemäss dieser bekannten Anordnung wird zur Herstellung einer Magnetplatte in einer Formhälfte einer Presse eine magnetisierbare Folie eingelegt, darauf dann ein vorgefertigter Kunststoff-Trägerkern. In die andere Hälfte der Presse wird die zweite magnetisierbare Folie eingelegt. Unter Wärmezuführung und Druck werden die beiden magnetisierbaren Folien mit dem Kunststoffkern verpresst. Aus dieser Auslegeschrift ist es auch bekannt, auf die vorstehend geschilderte Weise reine Magnetplattensubstrate, die aus Kunststoff bestehen, zu fertigen. Auf diese Substrate wird dann in einem nachfolgenden Gang die magnetische Schicht aufgebracht.

Das Problem bei der Herstellung von Magnetplatten bzw. von Magnetplattensubstraten gemäss der bekannten Anordnung besteht im Hinblick auf die gestiegenen Anforderungen an die Speicherdichte insbesondere darin, dass beim Herausnehmen der fertigen Magnetplatte bzw. des Plattensubstrats Teile desselben an der Form hängen bleiben. Dadurch gibt es Oberflächendeformationen bzw. Fehlstellen in der Magnetschicht. Insbesondere ist ein gravierendes Problem darin zu sehen, dass Kunststoffolien und Kunststoffmaterialien oberhalb einer bestimmten Temperatur, dem sogenannten Blockpunkt selbst bei nur leichtem Druck blocken bzw. haften bleiben. Diesem kann man mit Antiblockmitteln begegnen, welche jedoch in der Weise wirken, dass die Rauhigkeit der Oberfläche vergrössert wird, um die Kontaktfläche mit der Form zu verringern. Das Einbringen von Trennmitteln zwischen Teile der Pressform und den Folien bzw. dem Kunststoffkern führt zwar zu einer gewissen Verbesserung, reicht aber bei weitem nicht so weit, wie Versuche gezeigt haben, dass heutige Erfordernisse an die Rauhtiefe der Oberfläche erfüllt und somit das Auftreten fehlender Bits durch fehlendes Magnetmaterial vermieden würde. Es bleiben eben immer noch Materialteilchen in der Form hängen. Die gewünschte Rauhtiefe kann auch nicht durch Polieren der Magnetschicht erzielt werden, denn eine Nachbearbeitung ist nicht möglich. Verwendet man magnetisierbare Folien, dann müssen diese in einer benötigten geringen Dicke von etwa 0,05–0,8 µm vorhanden sein, was jedoch in der Praxis nicht möglich ist, denn solche dünnen Folien sind zum einen nicht verfügbar bzw. herstellbar und zum anderen nicht handhabbar.

Hier will die Erfindung Abhilfe schaffen. Die Erfindung, wie sie in den Ansprüchen gekennzeichnet ist, löst die Aufgabe, ein Magnetplattensubstrat zur Verfügung zu stellen, welches keine Oberflächenschäden aufweist und darüberhinaus eine Nachbearbeitung der Oberfläche prinzipiell ermöglicht.

Die durch die Erfindung erreichten Vorteile sind im wesentlichen darin zu sehen, dass die Ebenheit des Magnetplattensubstrats durch die Ebenheit des benutzten Werkzeugs bei der Verpressung des Kunststoffkerns mit den Metallfolien bestimmt ist und die Härte der Oberfläche und deren Rauhigkeit durch die davon unabhängigen Eigenschaften der Metallfolie bestimmbar sind. Wenn nötig kann im Hinblick auf die Rauhtiefe der Oberfläche eine Nachbehandlung der auf den Kern aufgebrachten Metallfolie nach bekannten Methoden erfolgen.

Zusätzliche Vorteile können sich insbesondere dann gemäss einer Ausführungsform ergeben, wenn als Kunststoffkern ein solcher verwendet wird, in welchem Fasern vorhanden sind. Benutzt man als Metallfolien harte Stahlfolien, kann es beim Pressvorgang vorkommen, dass sich die Faserstruktur bis in die Oberfläche der Metallfolie durchbildet bzw. abformt. Dies wird gemäss der Weiterbildung der Erfindung dadurch vermieden, dass zwischen Kern und Metallfolie eine plastisch verformbare weiche Schicht insbesondere aus Kupfer eingebracht wird. Dazu kann beispielsweise die als Stahlfolie ausgebildete Metallfolie einseitig durch Galvanisierung verkupfert sein. Zur Erhöhung der Haftung zwischen dem Kunststoffkern und der Metallfolie kann es zweckmässig sein, die Oberfläche der Kupferschicht bei der Galvanisierung rauh zu gestalten.

Im folgenden wird die Erfindung anhand der lediglich einen Ausführungsweg darstellenden Zeichnung näher erläutert. Darin zeigt

Fig. 1 schematisch im Schnitt den Aufbau des erfindungsgemäss gestalteten Magnetplattensubstrats und

Fig. 2 schematisch ein Werkzeug zur Herstellung des erfindungsgemässen Magnetplattensubstrats.

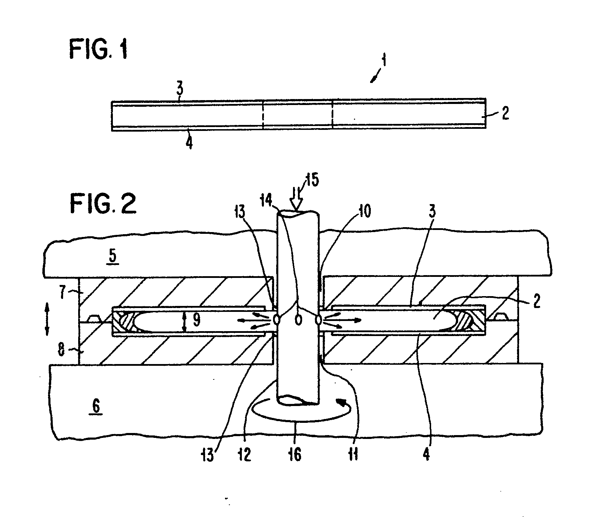

In Fig. 1 ist das erfindungsgemässe Magnetplattensubstrat 1 schematisch dargestellt. Es besteht aus einem Kunststoffkern 2, der beidseitig, gegebenenfalls auch einseitig, mit Metallfolien 3 und 4 belegt ist. Die Metallfolien 3 und 4 können zwischen 10 µm und 300 µm dick sein und besitzen die für die Oberfläche des Magnetplattensubstrats 1 notwendige Mikrohärte und weisen die gewünschte sehr geringe Rauhtiefe von etwa 0,05–0,1 µm auf. Reine Kunststoffsubstrate weisen nicht die notwendige Mikrohärte der Oberfläche auf, was mit der Erfindung durch die vorzugsweise aus Stahl bestehenden Metallfolien 3 und 4 erzielt wird. Diese Folien bieten auch die Basis und Grundlage dafür, dass entweder vor der Herstellung des Magnetplattensubstrats 1 oder danach durch Polieren die gewünschte Oberflächengüte der Metallfolien 3 und 4 hergestellt wird. Man kann also beispielsweise nach dem Verpressen des Kerns 2 und der Folien 3 und 4 durch Polieren die Oberflächengüte steigern.

Die Herstellung des Magnetplattensubstrats 1 kann auf zwei Weisen erfolgen. Die erste Weise besteht darin, dass ein bereits fertig hergestellter Kunststoffkern 2 beidseitig mit den Metallfolien 3 und 4 belegt wird, diese Anordnung in ein Presswerkzeug, wie es beispielsweise in der Fig. 2 dargestellt ist, eingebracht, erwärmt und unter Druck gesetzt wird. Ist der Kunststoff dann ausgehärtet, so sind die Metallfolien 3 und 4 mit dem Kern 2 verklebt. Die andere Herstellungsweise ist die, die in Fig. 2 näher dargestellt ist.

Fig. 2 zeigt ein mit 5 und 6 bezeichnetes Presswerkzeug, in dem eine aus zwei Hälften 7 und 8 bestehende Form eingebracht werden kann. In diese Formhälften 7 und 8 wird zum einen die obere Metallfolie 3 in die obere Formhälfte 7 eingelegt und zum anderen wird in die untere Formhälfte 8 die andere Metallfolie 4 eingelegt. Die beiden Metallfolien 3 und 4 weisen dabei ringförmige Gestalt auf, d.h. sie tragen in der Mitte jeweils ein ausgestanztes rundes Loch. Die Metallfolien sind durch einen gewissen Zwischenraum, der mit dem Doppelpfeil 9 bezeichnet ist, voneinander innerhalb der zusammengesetzten Formhälften 7 und 8 getrennt. In der Mitte sind beide Formhälften 7 und 8 mit einer Ausnehmung 10 bzw. 11 versehen, durch die ein Rohr 12 hindurchgeführt ist. Das Rohr 12 ist gegenüber dem Zwischenraum 9 und den Formhälften 7 und 8 mittels Dichtungen 13 abgedichtet. Das Rohr weist in der Mitte zwischen den Formhälften 7 und 8 im Zwischenraum 9 Öffnungen 14 auf, durch die von oben entsprechend dem Pfeil 15 unter Druck zugeführtes Kunststoffmaterial austreten kann und den Zwischenraum zwischen den Formhälften 7 und 8 bzw. den Metallfolien 3 und 4 ausfüllt. Das Rohr 12 kann dabei entsprechend dem Pfeil 16 gedreht werden.

Bei der Herstellung des erfindungsgemässen Magnetplattensubstrats 1 aus einem faserverstärktem Kern 2, können sich die Faserstrukturen bei Anwendung von sehr hohen Drücken durch die Stahlfolien 3 und 4 durchdrücken. Es gibt also ein schwaches Bild der Fasern, das sich auf der Oberfläche des Magnetplattensubstrats abbilden würde. Um dies zu vermeiden wird zwischen Kern 2 und Metallfolien 3 und 4 eine relativ weiche, plastisch verformbare Schicht eingebracht, die spannungsmindernd wirkt und die Faserstrukturen aufnimmt. Diese Schicht ist in den Figuren nicht näher dargestellt. Die Schicht sollte beispielsweise bei einer Faserstärke von 5 µm mindestens ebenfalls 5 µm dick sein. Die Obergrenze dieser Schichtdicke liegt bei etwa 100 µm. Zweckmässig ist eine solche Schicht aus Kupfer hergestellt, wobei die eventuell aus Stahl bestehenden Metallfolien 3 und 4 galvanisch einseitig verkupfert sind. Zur Haftungsverbesserung zwischen dem Kunststoffkern 2 und den Metallfolien 3 und 4 kann die Oberfläche der Kupferschicht rauh galvanisiert sein.

Auf das erfindungsgemäss hergestellte Magnetplattensubstrat 1, dessen Ebenheit durch die Ebenheit des benutzten Werkzeugs bzw. der benutzten Form 7, 8 bestimmt ist und dessen Oberflächengüte hinsichtlich der Mikrohärte und der Rauhtiefe durch die Metallfolie 3, 4 bestimmt ist, wird dann in bekannter Weise die gewünschte Magnetschicht aufgebracht. Dazu können die verschiedenen Techniken zum Aufbringen einer Magnetschicht benutzt werden, wie beispielsweise Spritz-Schleudern, Aufdampfen oder Aufsputtern.

**Patentansprüche**

1. Magnetplattensubstrat mit aus Kunststoff bestehendem Kern (2) und beidseitig darauf aufgebrachten Metallbelegungen, dadurch gekennzeichnet, dass die Metallbelegungen harte Metallfolien (3, 4) sind, und die mit dem Kern verbundene Innenseite der Metallfolien (3, 4) mit einer relativ weichen, plastisch verformbaren Schicht zur Spannungsminderung versehen ist.

2. Magnetplattensubstrat nach Anspruch 1, dadurch gekennzeichnet, dass als harte Metallfolie eine Stahlfolie vorgesehen ist.

3. Magnetplattensubstrat nach Anspruch 1 oder 2, dadurch gekennzeichnet, dass die spannungsmindernde Schicht aus weichem Kupfer besteht.

4. Magnetplattensubstrat nach Anspruch 3, dadurch gekennzeichnet, dass die Dicke der Kupferschicht ca. 5–100 µm beträgt.

5. Magnetplattensubstrat nach Anspruch 3 oder 4, dadurch gekennzeichnet, dass die Kupferschicht galvanisch auf die Metallfolie (3, 4) vor deren Verbindung mit dem Kern (2) aufgebracht ist.

6. Magnetplattensubstrat nach einem der Ansprüche 1–5, dadurch gekennzeichnet, dass die Oberfläche der spannungsmindernden Schicht der Metallfolie (3, 4) rauh gestaltet ist, zur Verbesserung der Haftung zwischen Kunststoffkern (2) und Metallfolie (3, 4).

7. Magnetplattensubstrat nach einem der vorhergehenden Ansprüche, dadurch gekennzeichnet, dass die Dicke der Metallfolie (3, 4) zwischen ca. 10 µm und 300 µm beträgt.

8. Magnetplattensubstrat nach einem der vorhergehenden Ansprüche, dadurch gekennzeichnet, dass als Kunststoffkern (2) ein faserverstärktes Kunststofflaminat vorgesehen ist.

**Claims**

1. Magnetic disk substrate with a core (2) consisting of synthetic material and metal depositions applied on both sides thereof, characterized in that the metal depositions are hard metal foils (3, 4), and that the inner side of the metal foils (3, 4) which is connected to the core is provided with a relatively soft, deformable layer for tension reduction.

2. Magnetic disk substrate as claimed in claim 1, characterized in that as a hard metal foil a steel foil is provided.

3. Magnetic disk substrate as claimed in claim 1 or 2, characterized in that the tension-reducing layer consists of soft copper.

4. Magnetic disk substrate as claimed in claim 3, characterized in that the thickness of the copper layer is approximately 5–100 µm.

5. Magnetic disk substrate as claimed in claim 3 or 4, characterized in that the copper layer is applied by electro-plating onto the metal foil (3, 4) before the latter is connected to the core (2).

6. Magnetic disk substrate as claimed in any one of claims 1 to 5, characterized in that the surface of the tension-reducing layer of the metal foil (3, 4) is roughened to improve the adhesion between synthetic core (2) and metal foil (3, 4).

7. Magnetic disk substrate as claimed in any one of the preceding claims, characterised in that the thickness of the metal foil (3, 4) is between approximately 10 µm and 300 µm.

8. Magnetic disk substrate as claimed in any one of the of the preceding claims, characterized in that as a synthetic core (2) a fiber reinforced synthetic laminate is provided.

**Revendications**

1. Substrat de disque magnétique comportant une âme (2) se composant de matière plastique et sur les deux côtés de laquelle sont déposés des revêtements métalliques, caractérisé en ce que les revêtements métalliques sont des feuilles métalliques dures (3, 4), et le côté intérieur, relié à l'âme, des feuilles métalliques (3, 4) est pourvu d'une couche relativement molle et plastiquement déformable pour une réduction de tension.

2. Substrat de disque magnétique selon la revendication 1, caractérisé en ce qu'il est prévu comme feuille métallique dure une feuille d'acier.

3. Substrat de disque magnétique selon la revendication 1 ou 2, caractérisé en ce que la couche de réduction de tension se compose de cuivre mou.

4. Substrat de disque magnétique selon la revendication 3, caractérisé en ce que l'épaisseur de la couche de cuivre s'élève à environ 5 à 100 µm.

5. Substrat de disque magnétique selon la revendication 3 ou 4, caractérisé en ce que la couche de cuivre est déposée galvaniquement sur la feuille métallique (3, 4) avant sa liaison avec l'âme (2).

6. Substrat de disque magnétique selon une des revendications 1 à 5, caractérisé en ce que la surface de la couche réductrice de tension de la feuille métallique (3, 4) est pourvue d'un profil rugueux pour améliorer l'adhérence entre l'âme (2) en matière plastique et la feuille métallique (3, 4).

7. Substrat de disque magnétique selon une des revendications précédentes, caractérisé en ce que l'épaisseur de la feuille métallique (3, 4) est comprise entre environ 10 µm et 300 µm.

8. Substrat de disque magnétique selon une des revendications précédentes, caractérisé en ce qu'il est prévu comme âme (2) en matière plastique un produit stratifié en matière plastique renforcé par des fibres.

## FIG. 1

## FIG. 2

5